# EUROPEAN PATENT APPLICATION

(11) **EP 2 207 378 A1**
(43) Date of publication of application: **14.07.2010**
(21) Application number: 09000350.0
(22) Date of filing: 13.01.2009
(51) Int. Cl.: H04W 24/00

(54) **A malfunction detection system**

(71) Applicant: Siemens Aktiengesellschaft, 80333 München (DE)
(72) Inventor: Ramirez, Alejandro, 80799 München (DE); Schwingenschlögl, Christian, Dr., 85640 Putzbrunn (DE); Ziller, Andreas, 81827 München (DE)

(57) **Abstract**

The inventions provides a malfunction detection system for a network (2) comprising the access points (1) wherein each access points (1) has at least one transceiver to communicate with a mobile node (4) integrated in a mobile device such as a train. A transceiver of each access point (1) provides a wireless link with a respective mobile node (4) and has a signal range which overlaps of a signal range of another transceiver provided within at least one neighboring access point. By using wireless communication between the neighboring access points by means of their respective transceivers diagnostic data indicating a malfunction of a neighboring access point is derived. The system according to the present invention reduces the number of necessary access points (1) and the necessary maintenance can be reduced without diminishing the availability and the reliability of the failure detection.

The method and system according to the present invention can be used in any safety critical network especially in hard environments such as a subway communication system, wireless roadside units, industrial WLAN infrastructures and wireless building automation and surveillance systems.

## Description

The invention relates to a malfunction detection system for a network and a method for detecting a malfunction of an access point in such a network, in particular in a safety-critical network.

Increasingly, wireless communication is also used for safety-critical systems and/or system with high availability requirements. These wireless communication networks comprise access points AP each having at least one transceiver establishing a wireless link to communicate with a mobile node. Such a conventional link can comprise several access points connected to each other in a daisy chain. These access points can be connected via loop access switches to a backbone network having a server. A mobile node can be integrated in a mobile device such as train which passes the access points of the network. For example, the access points can be mounted in a tunnel of a subway system and connected with each other by a cable for feature detection and for providing diagnostic data to a server of the backbone network which evaluates the diagnostic data. Since a system failure of such a wireless subway control system has a server impact because trains can no longer operate such a system often comprises redundant loops of access points.

Such a conventional wireless subway control system has several disadvantages. First the provision of redundant access points increases the number of access points which have to be installed and to be maintained. In many cases the installation and maintenance of access points is very difficult because they are located in badly accessible places such as tunnels of a subway system. Furthermore, in the conventional network a failure of an access point can remain unnoticed for some time since the moving mobile node such as a train controller TC in a moving train can establish a wireless link to the network via neighboring access points which sti-11 operate. Failures of an access point can, for example, be caused by instable antenna mountings, a failure of a transceiver card or a controller main board of the access point. In many cases a failure of one of several access points is only noticed when the mobile node can no longer establish a wireless link to the network and to the server of the backbone because several neighboring access points are faulty and the next operating access point is out of the signal range of the mobile node. In such a scenario a failure of the access point is detected at least at this late stage, however, in such a conventional system no diagnostic data is provided indicating which access points have failed and where they are located. Under these circumstances it is very difficult for a maintenance crew to find and substitute the faulty access points which are, for example, located within a tunnel of a subway system. Furthermore, in the conventional network there is no indication what kind of failure has occurred in the faulty access points.

Accordingly, it is an object of the present invention to provide a reliable malfunction detection system for a network comprising access points where failures of single access points are detected.

This object is achieved by an access point of a network,
wherein said access point comprises at least one transceiver for establishing a wireless link to communicate with a mobile node of said network,
wherein the signal range of the transceiver overlaps with a signal range of another transceiver provided in at least one neighboring access point to derive diagnostic data indicating a malfunction of said neighboring access point.

An advantage of the access point as provided by the present invention is that a malfunction of said access point can reliably be detected and that the location of a faulty access point is indicated.
In a possible embodiment of the access point according to the present invention the diagnostic data indicating a malfunction of the access point is derived depending on a signal received by the transceiver of said access point from a transceiver of a neighboring access point.

In the network according to the present invention transceivers provided within the access point for the communication with the mobile node are used also for monitoring of neighboring access points.

Accordingly, within the network according to the present invention the location of a faulty access point can be detected without the provision of additional hardware components.

In a possible embodiment of the access point as employed by the network according to the present invention each transceiver of said access point comprises at least one directed antenna to establish a wireless link with the mobile node.

In an embodiment of the access point as employed by the network according to the present invention the access point comprises at least two transceiver cards wherein each transceiver card is connected to directed antennas which establish wireless radio links to neighboring access points and
wherein each transceiver card is connected via an interface to a main control board of said access point.

The provision of at least two directed antennas on both sides of the access point allows to monitor neighboring access points on both sides of the respective access point including the immediate neighboring access points and further access points within a signal range of the transceivers.

In a possible embodiment the access point as employed by the network according to the present invention is connectable to neighboring access points via a cable forming a wired link.

In this embodiment the access point are connected to each other via a cable in a daisy chain to form a loop of access points.

In an alternative embodiment the access point as employed by the network according to the present invention is connectable to neighboring access points via a further wireless link, in particular a wireless radio link.

This additional wireless link can be provided in a possible embodiment by a transceiver of the access point by exchanging signals with the neighboring access points in another frequency range than the frequency range of the wireless link between the access point and the mobile node.

In a possible embodiment of the access point as employed by the network according to the present invention the connection of said access point with its neighboring access points via said wired or wireless links is monitored continuously.

In a possible embodiment of the access point as employed by the network according to the present invention a signal strength of said signal received by said transceiver of said access point via the wireless link from the transceiver of the neighboring access point is monitored continuously.

In a possible embodiment the communication of said access point with the mobile node via said wireless link and said monitoring of said wired or wireless links of said access points with its neighboring access points is performed in parallel by said access point.

In an alternative embodiment the respective access point is switchable between a communication mode where the access point communicates with said mobile node via said wireless link and a monitoring mode wherein the access point monitors the wired and wireless links with its neighboring access points.

In an embodiment of the access point as employed by the network according to the present invention the indicated malfunctions comprise a malfunction of a wired link to a neighboring access point,
a malfunction of a wireless link to a neighboring access point and a complete malfunction of the respective access point.

In an embodiment of the access point as employed by the network according to the present invention said indicated malfunction of a wireless link to a neighboring access point comprises
a malfunction of an antenna cabling connecting the antenna with the transceiver,
a malfunction of an antenna mounting and
a malfunction of a transceiver card of said neighboring access point.

In an embodiment of the access point as employed by the network according to the present invention the wireless link between the access point and the mobile node comprises a wireless radio link.

In a further embodiment of the access point as employed by the network according to the present invention the wireless link between the access point and the mobile node is formed by a wireless optical link.

In a further embodiment of the access point as employed by the network according to the present invention the wireless link between the access point and the mobile node comprises an acoustic wireless link.

The invention further provides a malfunction detection system for a network comprising access points each having at least one transceiver to communicate with a mobile node via a wireless link,
wherein said transceiver has a signal range which overlaps with a signal range of another transceiver provided within a neighboring access point to derive diagnostic data indicating a malfunction of the neighboring access point.

In an embodiment of the malfunction detection system according to the present invention the access points are connected to each other via wired links and supply said diagnostic data to a server which evaluates said diagnostic data.

The invention further provides a method for detecting a malfunction of an access point in a network,
wherein diagnostic data indicating a malfunction of the access point is derived by a neighboring access point on the basis of a signal transmitted by a transceiver of said access point and received by a transceiver of said neighboring access point,
wherein the transceivers are provided for establishing a wireless link to a mobile node of said network and comprise overlapping signal ranges.

In the following embodiments of malfunction detection system for a network and a method for detecting a malfunction of an access point within a network are described with reference to the enclosed figures.
- Fig. 1: shows a block diagram of an arrangement of access points which is employed by a network according to the present invention having a malfunction detection system;
- Fig. 2: shows a block diagram of a system architecture for a subway communication system as an embodiment of the network according to the present invention;
- Fig. 3: a wiring of two access points in a tunnel as provided by a subway communication system as shown in fig. 2;
- Fig. 4: a block diagram of a possible embodiment of an access point according to the present invention;
- Fig. 5A, 5B: an embodiment of a data structure as used in the network according to the present invention to derive diagnostic data;
- Fig. 6: a flow chart to illustrate a wireless system diagnosis as performed by a possible embodiment of the method according to the present invention.

In the following embodiments of access points and the network according to the present invention as well as embodiments of the method for detecting a malfunction of an access point in the network are described with reference to the encloses figures.

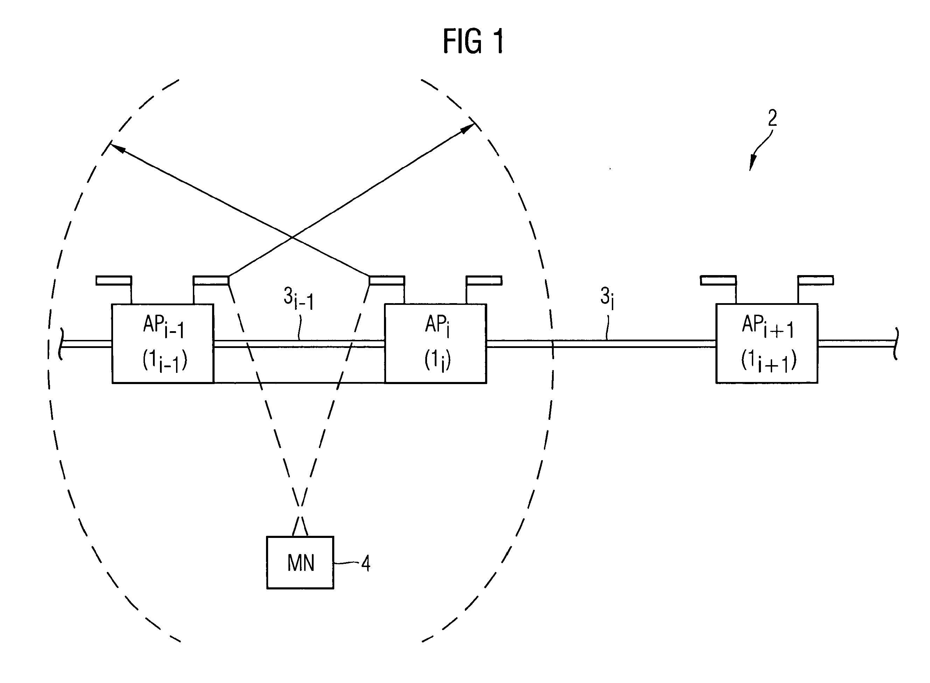

As can be seen in fig. 1 several access points 1 are connected in a possible embodiment of a network 2 in series by means of cables 3. Each access point 1 according to the present invention comprises at least one transceiver for establishing a wireless link to communicate with a mobile node 4 of the network 2. The mobile node 4 also comprises a transceiver for receiving and transmitting signals. As indicated in fig. 1 the transceivers of the different access point have overlapping signal ranges. Since the signal range of the access points is overlapping, each access point 1-i can communicate at least with its immediate neighboring access points on both sides, i.e. access point 1ᵢ₋₁ and access point 1ᵢ₊₁. In some embodiments each access point can communicate by means of its transceivers with more than one access point on each side. The transceivers of the different access points are provided to establish a bidirectional communication wireless link with the mobile node 4 which can be integrated in a mobile device such as a train. In the network 2 according to the present invention a direct communication between the different access points 1 is possible by using the transceiver which is provided for the wireless link with the mobile mode 4. This direct communication allows for an improved diagnosis and maintenance. Overlapping signal ranges of the transceivers are used to derive diagnostic data indicating a malfunction of a neighboring access point. In the network 2 according to the present invention the overlapping signal ranges of the different access points 1 are used to connect the access points 1 to each other. In a possible embodiment the diagnostic data is derived within an access point 1 depending on a signal received by the transceiver of this access point from a transceiver of a neighboring access point. As shown in fig. 1 each access point 1 is connected to neighboring access points via a cable 3 forming a wired link. This cable 3 can be a conventional network cable but also a glass fiber. In an alternative embodiment the direct link between the access points 1 can also be formed by a wireless link.

In a preferred embodiment the wireless link for bidirectional communication of the access point 1 with the mobile node 4 is a radio link, i.e. the transceivers of the access point 1 and the mobile node 4 exchange radio signals in a predetermined frequency range. In an alternative embodiment the wireless link between the access point 1 and the mobile node 4 can be formed by an optical link or by an acoustic link.

In the network 2 according to the present invention the connection of the connection point 1i with its neighboring access points 1ᵢ₋₁, 1ᵢ₊₁ via the wired link 3ᵢ₋₁, 3i as well as the wireless link formed by the transceivers with overlapping signal ranges is monitored continuously.

Further, the signal strength of a signal received by a transceiver of the access point 1ᵢ via a wireless link from the transceiver of its neighboring access points is monitored as well.

In a possible embodiment the communication of the access point 1 with the mobile node 4 via the wireless link and the monitoring of the wired or wireless links of the access point with its neighboring access points are performed in parallel by the access point 1. In this embodiment the access points set up different virtual network interfaces,
wherein one interface is provided for communication with the mobile node 4 and one interface is used for the direct communication between the access points.

In an alternative embodiment each access point 1ᵢ is switchable between a communication mode where the respective access point 1 communicates with the mobile node 4 via its wireless link and a monitoring node where the respective access point 1 monitors the wired and wireless links with its neighboring access points. In this embodiment the connection between the access points 1 is performed dynamically. The mobile node 4 is for example provided in a train passing the access points 1 of the network 2. Each access point 1 switches to a monitoring mode in time slots between different trains or whenever its operation allows such a switching to the monitoring mode, e.g. during night-time. In the monitoring mode failure patterns can be gained for an early and accurate detection of partial system malfunctions.

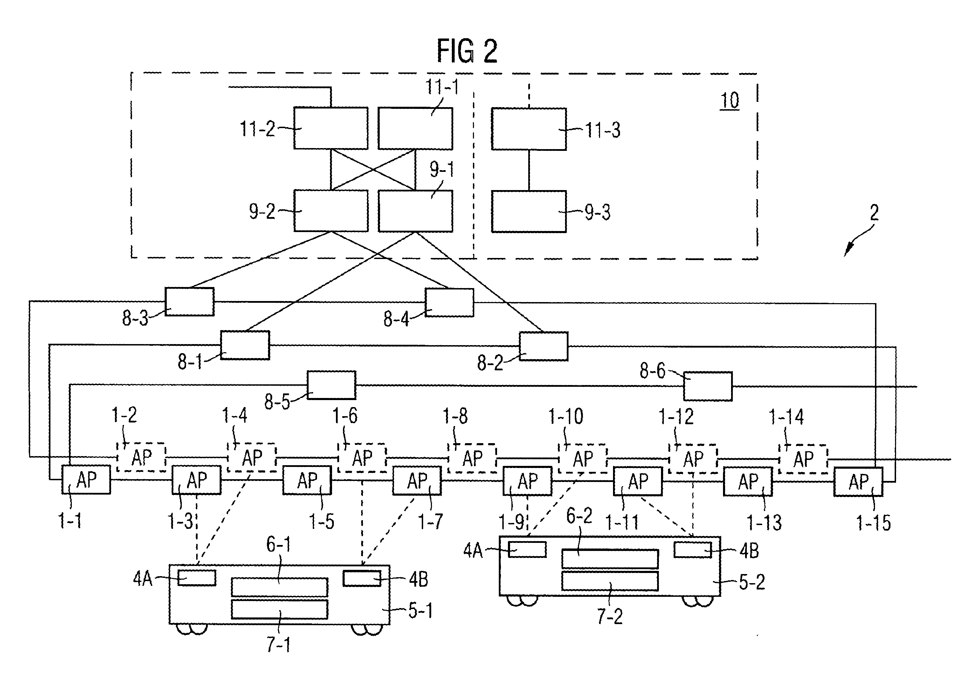

Fig. 2 shows an exemplary embodiment of a network 2 according to the present invention. In this embodiment the network 2 forms a subway communication system. In the embodiment shown in fig. 2 a mobile node 4 is formed by a train controller integrated in a train unit of a subway train wherein each wagon 5-1, 5-2 of the subway train can comprise, for example two train units 4A, 4B as mobile nodes 4 at the front end and at the back end of the respective wagon 5-1, 5-2. Each wagon 5-1, 5-2 of the subway train can comprise furthermore a passenger information system interface 6-1, 6-2 and a train guard system 7-1, 7-2. The wagons 5-1, 5-2 of the subway train are moving, for example between two stations in a tunnel. In the embodiment shown in fig. 2 two loops of serial connected access point 1-i are mounted in the subway tunnel. In the shown embodiment access points 1-1 to 1-15, i.e. all access points with odd index numbers form a first loop of access points and access points 1-2 to 1-14, i.e. access points with even index numbers form a second loop of access points. The provision of two loops of access points provides redundancy and increases the security of the system against failure. In an alternative embodiment only one loop of serial connected access points 1 is provided. As can be seen in fig. 2, the first loop of access points 1-i to 1-15 is connected by loop access switches 8-1, 8-2 to a first network switch 9-1 of a backbone network 10. Further, the second loop of access points 1-2 to 1-14 is connected by means of access switches 8-3, 8-4 to a second network switch 9-2 of the backbone network 10.

In a possible embodiment as shown in fig. 2 one of the loops of access points is further connected by means of loop access switches 8-5, 8-6 to a PIS network switch 9-3 of a passenger information system of the backbone network 10. The network switches 9 can be connected to ATC servers 11 which in turn can be connected to an ATS bus or can form an interface to a passenger information system PIS. The access points 1-i of the two parallel access points loops communicate with the train controllers of the subway train when it passes through the tunnel. The access points 1-i are mounted in the tunnel wherein each access point comprises at least one antenna to establish a wireless link with the mobile node 4.

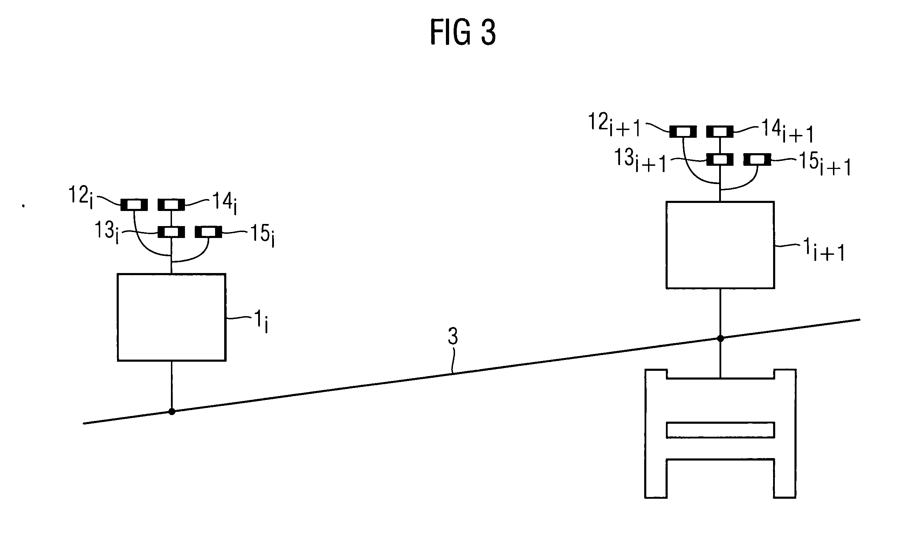

Fig. 3 shows access points 1 within a subway tunnel connected to each other by means of a cable 3. This cable 3 can be used, i.a. for power supply of the access points 1. In the embodiment shown in fig. 3 each access point 1-i comprises four directed antennas 12, 13, 14, 15. In a possible embodiment each access point 1 consists of at least two transceivers cards, four directed antennas, wherein two antennas are provided for each transceiver card.

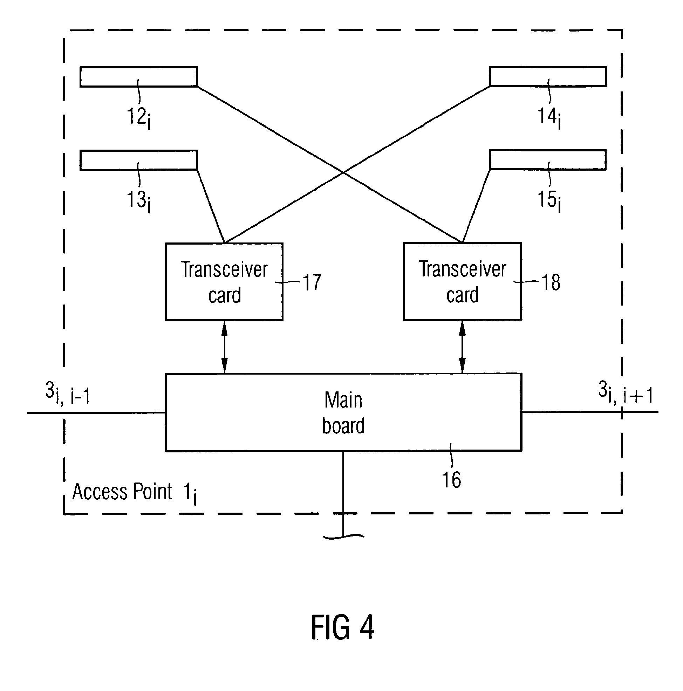

Fig. 4 shows a block diagram of a possible embodiment of an access point 1 according to the present invention. Each access point 1-i comprises a main control circuit board 16 and two transceiver cards 17, 18. Those transceiver cards 17, 18 are connected to the main board 16 via interfaces. The transceiver cards 17, 18 each can comprise a MAC-address. The transceiver cards 17, 18 comprise transceivers to establish a wireless link to the mobile node 4 by means of the directed antennas 12-15. To increase the security of the system two antennas are provided on each side of the access point 1, i.e. directed antennas 12, 13 to the left and directed antennas 14, 15 to the right as shown in fig. 4. As can be seen in fig. 4, a transceiver card 17 is connected to a directed antenna 13-i on the left side and to a directed antenna 14-i on the right side. Furthermore, the transceiver card 18 is connected to a directed antenna 12-i on the left side and to a directed antenna 15-i on the right side of the access point 1-i. According to the embodiment as shown in fig. 4, it is possible that one transceiver card fails and the remaining transceiver card is still able to transmit and receive signals on both sides of the access point 1. In the embodiment as shown in fig. 4 a transceiver card 17, 18 comprises transceivers transmitting and receiving radio signals to establish a wireless link, wherein the transceivers can comprise for example a WLAN transceiver, a WiFi transceiver, a WiMax transceiver, but also a bluetooth transceiver or any proprietary protocol transceivers. In a possible embodiment the radio transceiver is formed by a WLAN transceiver operating at a frequency of 2,4 GHz and having a signal range of approximately 100m.

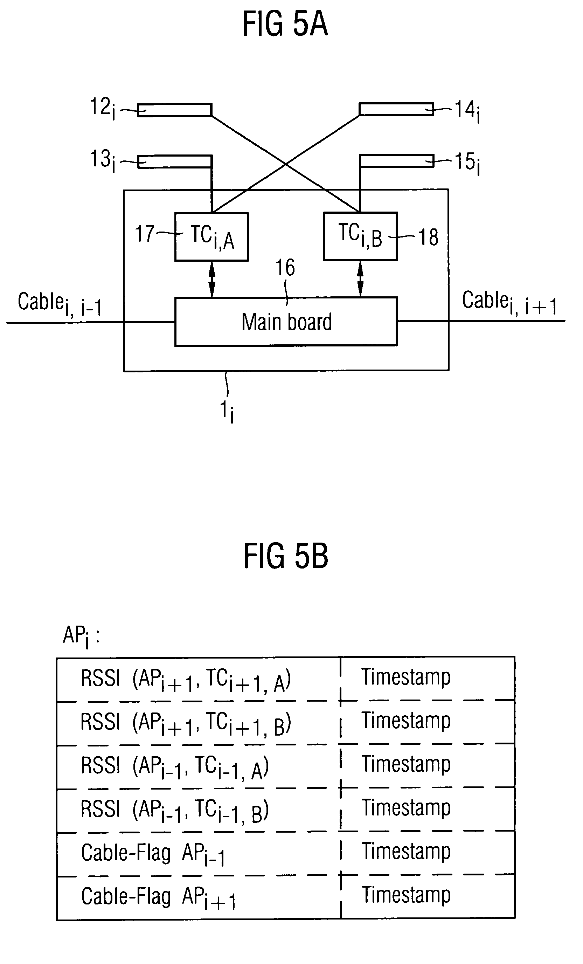

Fig. 5A, 5B indicate a possible data structure used to derive a diagnostic data indicating a malfunction of an access point 1 within the network 2 according to the present invention. The signal ranges of neighboring access points 1 overlap and each access point 1 can receive signals not only from the mobile node 4 but also from its neighboring access points. In a possible embodiment the signal strength of a signal received by a transceiver within the access point 1 via such a wireless link from the neighboring access point is monitored. In a table as shown in fig. 5B a received signal strength indicators RSSI each indicating a signal strength of a received signal from a neighboring access point and cable connection conditions of connections to the neighboring access points is stored. As shown in fig. 5B it are stored in a memory for access points 1-i a received signal strength indicator RSSI of a signal received from the next access points 1ᵢ₊₁ by the transceiver card via the directed antenna 14-i. Further, the received signal strength indicator RSSI of the received signal from the next access point 1ᵢ₊₁ by the other transceiver card by means of the directed antenna 15-i is stored. In the same manner the received signal strength RSSI of the preceeding access point 1ᵢ₋₁ by the first transceiver card 17 via the directed antenna 13-i as well as the received signal strength RSSI of the preceeding access point 1ᵢ₋₁ by the other transceiver card 18 via the directed antenna 12-i is stored along with a time stamp TS in the memory.

The table as shown in fig. 5B can be stored in a possible embodiment in a data base to which the servers 11 of the backbone network 10 have access. In an alternative embodiment the table shown in fig. 5B can be stored locally in a memory of the respective access points 1. In the embodiment shown in fig. 5A each access point 1 further monitors whether a direct cable connection to the immediate neighboring access points 1ᵢ₋₁ and 1ᵢ₊₁ is provided. In a possible embodiment this is done by providing a cable flag indicating the status of the connection. The cable flag APᵢ₋₁ and the cable flag APᵢ₊₁ indicate the status of the cable connection to the immediate neighboring access points within the loop.

In the network 2 according to the present invention it is possible that an access point 1 can monitor its neighboring access points and can detect malfunctions and distinguish different failure conditions with a high probability. These indicated malfunctions can comprise a malfunction or failure of a wired link or a cable 3 to a neighboring access point, a malfunction or failure of a wireless link to a neighboring access point, and a complete malfunction of the respective access point 1.

Further the malfunction of a wireless link to a neighboring access point can comprise different failure conditions such as a malfunction of an antenna cabling connecting an antenna with a respective transceiver card, a malfunction of an antenna mounting and a malfunction of a transceiver card within the access point. Furthermore it can be detected that the access point is failure free.

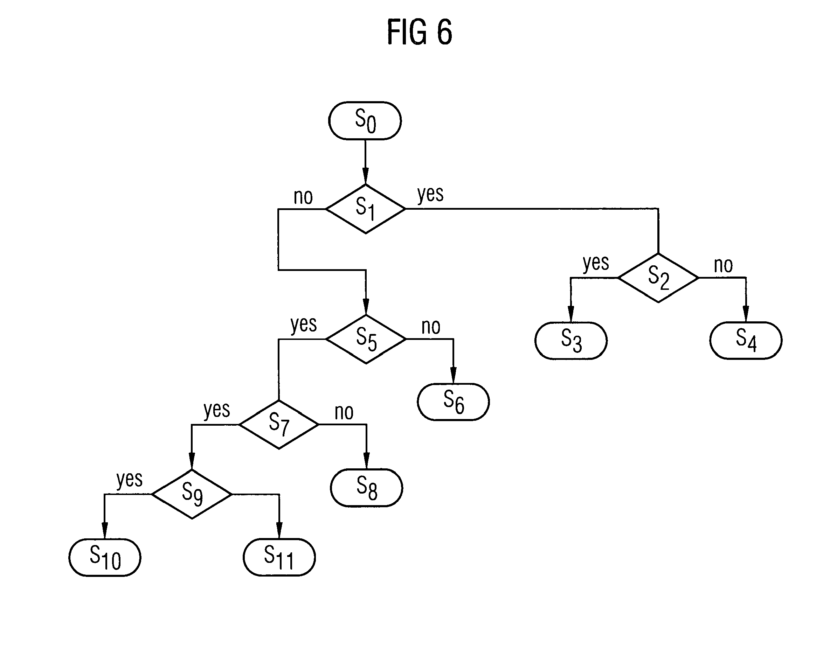

Fig. 6 shows a flow of a possible embodiment of an enhanced wireless system diagnosis as employed by the network 2 according to the present invention.

In a possible embodiment the process can be triggered by a radio server 11 within the backbone network 10 to start the diagnosis in step S0.

In step S1 it is decided whether the two MAC-addresses of the transceiver cards 17, 18 within the monitored access points 1 are visible by the mobile node 4 and operating. In step S1 it is decided whether the transceiver cards 17, 18 of the respective access point 1 are failure free. If this is the case (yes) it is decided whether the neighboring access point is accessible via cable 3. If this is also the case (yes) no failure has been detected in the wireless scan of the access point 1 and the access point 1 is indicated to be failure free in step S3. If the access point 1 is not accessible via cable 3, it is detected in step S4 that a failure on the respective cabling has occurred and this is notified to the server 11 of the backbone network 10.

If in step S1 it has been found, that the transceiver card 17, 18 within the access point does not work probably it is decided in step S5 whether the respective access point 1 is accessible via cable 3. If this is not the case (no) it is detected in step S6 that the access point 1 has failed completely and this is notified to the radio server 11 in the backbone network 10. On the contrary if it found in step S5 that the access point 1 is accessible via cable 3, it is decided in step S7 whether the interfaces between the transceiver cards and the main board are up and accessible via cable in step S7. If this is not the case (no) it is detected in step S8 that the respective transceiver card 17, 18 of the access point 1 has failed. This can be notified to the radio server. If in step S7 it has been found that the interfaces are up and accessible via the cable, there must be an antenna or antenna mounting failure. To decide whether there is an antenna cabling or an antenna mounting failure it is checked in step S9 whether a characteristic link degradation pattern has been observed or not. If there has been a characteristic link degradation pattern it is decided in step S12 that there is probably an antenna mounting failure. In the contrary case if no characteristic link degradation pattern has been observed, it is decided in step S11 that probably an antenna cabling failure has occurred.

With the system according to the present invention, it is even possible to distinguish between failures of an antenna cabling of a directed antenna 12-15 as shown in fig. 4 and an antenna mounting failure. This failure condition can be diagnosed especially well in a case when the antenna mounting becomes loose gradually. In a possible embodiment this can be achieved by an evaluation of the SNR (signal-to-noise ratio) or the respective link quality. Directed antennas are very sensitive to its orientation. Accordingly one can expect a characteristic link degradation pattern in case that the respective directed antenna loosens and that its orientation is gradually lost.

According to the system according to the present invention a failure of an access point 1 within an access point loop of the network 2 is detected early by neighboring access points 1 within the loop. A server is notified to indicate a malfunction of the respective access point 1 even before a complete disfunction or failure of the respective access points 1 occurs. The system of the present invention offers furthermore a distinction between different failure conditions which need different maintenance actions. Within the network 2 of the present invention a direct access point communication is provided to enhance diagnosis through combined wired/wireless analyses. As shown in the flow chart of fig. 6 different evaluations are possible using wireless scans and allow to distinguish between different failure conditions of components within the access point 1. The present invention provides high granularity in monitoring the system status. Furthermore, failure conditions which do not affect the system availability but the system redundancy can be detected early. By monitoring access points 1 by neighboring access points via signals transmitted by the transceivers, the early detection of possible failure conditions makes it possible to reduce redundancy in the system. For example in the embodiment shown in fig. 2 it is possible to dispense with one of the two access point loops because the remaining access point loop works very reliable and a possible failure of a component within an access point 1 can be detected at early stage. Consequently it is possible with the present invention the reduce the number of access points 1 to be mounted and maintained, for example in a subway tunnel without diminishing the security and availability of the whole system.

The network 2 according to the present invention can be used in many different applications. An advanced failure detection according to the present can be used in any kind of safety critical network. For example, the network 2 according to the present invention can be used in process automation, wireless road side units, industrial WLAN infrastructures or for wireless building automation or surveillance.

## Claims

1. An access point (1) of a network (2),
said access point (1) comprising at least one transceiver for establishing a wireless link to communicate with a mobile node (4) of said network (2),
wherein a signal range of said transceiver overlaps with a signal range of another transceiver provided in at least one neighboring access point to derive diagnostic data indication a malfunction of said neighboring access point.

2. The access point according to claim 1,
wherein said diagnostic data is derived on the basis of a signal received by said transceiver of said access point (1) from the transceiver of said neighboring access point.

3. The access point according to claim 1 or 2,
wherein each transceiver comprises at least one directed antenna (12, 13, 14, 15) to establish a wireless link with said mobile node (4).

4. The access point according to claims 1-3,
wherein said access point (1) comprises at least two transceiver cards (17, 18),
wherein each transceiver card (17, 18) is connected to directed antennas (12, 13, 14, 15) which establish wireless radio links to neighboring access points and wherein each transceiver card (17, 18) is connected via an interface to a main board (16) of said access point (1).

5. The access point according to claims 1-4,
wherein said access point (1) is connectable to neighboring access points via a cable (3) forming a wired link or via a further wireless link.

6. The access point according to claim 5,
wherein the connection of said access point (1) to said neighboring access points via said wired or wireless link is monitored.

7. The access point according to claim 1-6,
wherein a signal strength of said signal received by said transceiver of said access point (1) via said wireless link from the transceiver of said neighboring access point is monitored.

8. The access point according to claims 6 or 7,
wherein said communication of said access point (1) with said mobile node (4) via said wireless link and said monitoring of said wired or wireless links of said access point (1) with said neighboring access points is performed in parallel by said access point (1).

9. The access point according to claims 6 or 7,
wherein said access point (1) is switchable between a communication mode in which said access point (1) communicates with said mobile node (4) via said wireless link; and
a monitoring mode in which said access point (1) monitors its wired and wireless links with neighboring access points.

10. The access point according to claims 1-9,
wherein said indicated malfunction comprises:
a malfunction of a wired link to a neighboring access point;
a malfunction of a wireless link to a neighboring access point; and
a malfunction of the complete access point.

11. The access point according to claims 1-10,
wherein said indicated malfunction comprises:
a malfunction of an antenna cabling connecting an antenna with said transceiver;
a malfunction of an antenna mounting; and
a malfunction of a transceiver card of said neighboring access point.

12. The access point according to claims 1-11,
wherein said wireless link comprises:
a radio link,
an optical link; or
an acoustic link.

13. A malfunction detection system for a network (2) comprising:
access points (1) each having at least one transceiver to communicate with a mobile node (4) via a wireless link,
wherein the transceiver has a signal range which overlaps with a signal range of another transceiver provided within a neighboring access point to derive diagnostic data indicating a malfunction of said neighboring access point.

14. The malfunction detection system according to claim 13,
wherein said access points (1) are connected to each other via wired links and supply said diagnostic data to a server which evaluates said diagnostic data.

15. A method for detecting a malfunction of an access point (1) in an network (2),
wherein diagnostic data indicating a malfunction of said access point (1) is derived by a neighboring access point on the basis of a signal transmitted by a transceiver of said access point (1)received by a transceiver of said neighboring access point,
wherein said transceivers are provided for establishing a wireless link to a mobile node (4) of said network (2) and comprise overlapping signal ranges.
